(19) Europäisches Patentamt / European Patent Office / Office européen des brevets

(11) **EP 4 296 397 A1**

(12) **EUROPEAN PATENT APPLICATION**
published in accordance with Art. 153(4) EPC

(43) Date of publication:
**27.12.2023 Bulletin 2023/52**

(21) Application number: **22795531.7**

(22) Date of filing: **31.03.2022**

(51) International Patent Classification (IPC):
*C22C 38/00* (2006.01)       *C22C 38/58* (2006.01)
*B23K 35/30* (2006.01)       *B23K 35/362* (2006.01)
*B23K 9/18* (2006.01)       *B23K 9/23* (2006.01)

(52) Cooperative Patent Classification (CPC):
**B23K 9/18; B23K 9/23; B23K 35/30; B23K 35/362;
C22C 38/00; C22C 38/58**

(86) International application number:
**PCT/JP2022/016785**

(87) International publication number:
**WO 2022/230615 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 JP 2021074733**

(71) Applicant: JFE Steel Corporation
**Tokyo 100-0011 (JP)**

(72) Inventors:
• **TAKADA, Atsushi**
  **Tokyo 100-0011 (JP)**
• **ISHIGAMI, Atsushi**
  **Tokyo 100-0011 (JP)**
• **WATANABE, Kazufumi**
  **Tokyo 100-0011 (JP)**

(74) Representative: **Grünecker Patent- und
Rechtsanwälte
PartG mbB
Leopoldstraße 4
80802 München (DE)**

(54) **SUBMERGED ARC WELDED JOINT**

(57)    Provided is a submerged arc welded joint having a weld metal formed by performing submerged arc welding with a heat input of 300 kJ/cm or more.

A submerged arc welded joint has a weld metal having a specified chemical composition, specified yield strength, and specified tensile strength, in which, when a V-notch Charpy impact test is performed at a testing temperature of 0°C on the weld metal, absorbed energy takes a specified value, in which Ceq, which is expressed by a below equation (1), is 0.65 to 1.00, and in which $\alpha$, which is expressed by a below equation (2), is 6.0 or less.

$$Ceq = [C] + 0.17[Mn] + 0.04[Si] + 0.025[Ni] + 0.2[Cr] + 0.25[Mo] \cdots (1)$$

$$\alpha = 30[C] + 0.7[Mn] + [Ni] - ([Si] + 0.5[Cr] + 1.5[Mo]) \cdots (2)$$

Here, in the equation (1) and the equation (2), the expression "[element symbol]" denotes a content (mass%) of the corresponding element in the weld metal described above.

**Description**

Technical Field

The present invention relates to a submerged arc welded joint and, in particular, to a submerged arc welded joint having a weld metal obtained by performing submerged arc welding with a welding heat input of 300 kJ/cm or more on high-strength steel of a 780 MPa class which is used for building structures.

Background Art

Nowadays, there is a trend toward an increase in the strength of steel plates used for steel frames due to an increase in the size or span of building structures. Although steel of a 590 MPa class or lower has been mainly used for the skin plates of a box column to date, there is a trend toward using steel of a 780 MPa class nowadays. A submerged arc welding method is generally used for welding the skin plates of a box column, and the weld metal is required to have strength properties equivalent to those of the base material.

As an example of a submerged arc welding material with which it is possible to achieve a weld metal having a strength of 780 MPa or higher, Patent Literature 1 discloses a submerged arc welding solid wire. Patent Literature 1 describes that it is possible to significantly improve the low-temperature toughness and hydrogen embrittlement resistance of the weld metal by specifying the mass contents of C, Si, Mn, Ni, Cr, Mo, P, and S in the wire and by controlling ([Mn] + [Ni])/([Cr] + [Mo]) to be 1.4 to 4.0.

In addition, Patent Literature 2 discloses a submerged arc welding method for high strength steel of a 780 MPa class. Patent Literature 2 describes that it is possible to form a good bead shape without slag entrainment by optimizing the amount of alloy elements in a sintered flux and the particle size of the flux and that it is possible to achieve a weld metal having a high tensile strength of 780 MPa or higher and good low-temperature toughness by specifying the chemical composition of a solid wire to be used in combination with the flux described above.

In addition, Patent Literature 3 discloses a double-sided single-layer submerged arc welding wire. Patent Literature 3 describes that it is possible to achieve satisfactory strength and toughness of the weld metal by specifying the chemical composition of the wire used in double-sided single-layer submerged arc welding in which the amount of the base material dilution is large and that it is possible to achieve satisfactory wire feedability by specifying the tensile strength of the wire to be 1200 N/mm$^2$ or lower.

Moreover, Patent Literature 4 discloses a high-strength welded steel pipe which is manufactured by performing submerged arc welding to form a single layer on each of the inner and outer surfaces, in which the base material and the weld metal both have a tensile strength of 800 MPa or higher, and in which the weld metal is excellent in terms of cold cracking resistance. Patent Literature 4 describes that it is possible to obtain the weld metal excellent in terms of cold cracking resistance by specifying a CS value which is calculated by using the contents of Mo, Ni, Mn, and C.

Citation List

Patent Literature

PTL 1: Japanese Unexamined Patent Application Publication No. 2015-110241
PTL 2: Japanese Unexamined Patent Application Publication No. 2015-120175
PTL 3: Japanese Unexamined Patent Application Publication No. 2004-337863
PTL 4: Japanese Unexamined Patent Application Publication No. 2008-240096

Summary of Invention

Technical Problem

However, the welding heat input applied in any one of Patent Literature 1 to Patent Literature 4 is 50 kJ/cm or less. In the case where a box column having skin plates for which a steel material of a 590 MPa class or lower is used is manufactured, submerged arc welding is generally performed with a welding heat input (hereinafter, also simply referred to as "heat input") of more than 300 kJ/cm from the viewpoint of operation efficiency. However, in the case where welding is performed by using any one of the welding materials disclosed in Patent Literature 1 to Patent Literature 4 with a heat input of 300 kJ/cm or more, there is a problem in that the strength of the weld metal is not sufficient, that the toughness of the weld metal is not sufficient, or that hot cracking occurs. Here, the expression "the strength of the weld metal is sufficient" denotes a case where, when a tensile test is performed at room temperature on a weld metal which is formed in accordance with the prescription in JIS Z 3111, the yield strength (0.2% proof strength) is 630 MPa or more, and the tensile strength is 780 MPa or more. In addition, the expression "the toughness of the weld metal is sufficient" denotes a case where, when a V-notch Charpy impact test is performed at a testing temperature of 0°C on the weld metal of a welded joint which is formed in accordance with the prescription in JIS Z 3128, the absorbed energy vE0 is 47 J or more.

An object of the present invention is to provide a submerged arc welded joint having a weld metal formed by performing submerged arc welding with a heat input of 300 kJ/cm or more by solving the problems described above.
Solution to Problem

The present inventors diligently conducted investigations to solve the problems described above and, as a result, found it effective for achieving the sufficient strength and toughness to control the content of Ni, with which it is possible to improve strength without causing a deterioration in toughness, to be 2.5 mass% or more and to control Ceq, which is expressed by the below equation (1), to be 0.65 to 1.00. Moreover, it was found to be effective for preventing hot cracking to adjust α, which is expressed by the below equation (2), to be 6.0 or less.

The present invention has been made on the basis of the knowledge described above and additional investigations.

The subject matter of the present invention is as follows.

[1] A submerged arc welded joint, the joint having a weld metal which is formed by using a welding wire and a flux in combination and by performing submerged arc welding with a welding heat input of 300 kJ/cm or more, in which the weld metal has a chemical composition containing, by mass%,

C: 0.05% to 0.15%,
Si: 0.2% to 0.9%,
Mn: 0.5% to 1.3%,
P: 0.015% or less,
S: 0.015% or less,
Cr: 0.10% to 0.45%,
Mo: 0.5% to 2.0%,
Ni: 2.5% to 6.0%,
O: 0.040% or less,
N: 0.012% or less, and a balance of Fe and incidental impurities, in which Ceq, which is expressed by a below equation (1), is 0.65 to 1.00, in which α, which is expressed by a below equation (2), is 6.0 or less, in which, when a tensile test is performed on the weld metal, yield strength is 630 MPa or higher and tensile strength is 780 MPa or higher, and in which, when a V-notch Charpy impact test is performed at a testing temperature of 0°C on the weld metal, absorbed energy vE0 is 47 J or more.

$$Ceq = [C] + 0.17[Mn] + 0.04[Si] + 0.025[Ni] + 0.2[Cr] + 0.25[Mo] \cdots (1)$$

$$\alpha = 30[C] + 0.7[Mn] + [Ni] - ([Si] + 0.5[Cr] + 1.5[Mo]) \cdots (2)$$

Here, in the equation (1) and the equation (2), the expression "[element symbol]" denotes a content (mass%) of the corresponding element in the weld metal described above.

[2] The submerged arc welded joint according to item [1], in which the weld metal has the chemical composition further containing, by mass%, one, two, or all selected from

Cu: 0.8% or less,
Al: 0.20% or less, and
Ti: 0.20% or less.

[3] The submerged arc welded joint according to item [1] or [2], in which the weld metal has the chemical composition further containing, by mass%, one, two, or more selected from

Nb: 0.10% or less,
V: 0.10% or less,
Ca: 0.010% or less,
B: 0.010% or less, and
REM: 0.020% or less.

Advantageous Effects of Invention

According to the present invention, in the case where high heat input submerged arc welding is performed with a heat input of 300 kJ/cm or more, when a tensile test is performed on the weld metal of the welded joint, a yield strength (0.2% proof strength) of 630 MPa or higher and a tensile strength of 780 MPa or higher are achieved; when a V-notch Charpy impact test is performed at a temperature of 0°C on the weld metal, toughness of an absorbed energy of 47 J or more is achieved; and also it is possible to prevent hot cracking. Such results have significant effects on the industry.

Description of Embodiments

The present invention is a submerged arc welded joint having a weld metal which is formed by performing high heat input submerged arc welding with a heat input of 300 kJ/cm or more. The weld metal of the submerged arc welded joint according to the present invention has a chemical composition containing, by mass%, C: 0.05% to 0.15%, Si: 0.2% to 0.9%, Mn: 0.5% to 1.3%, P: 0.015% or less, S: 0.015% or less, Cr: 0.10% to 0.45%, Mo: 0.5% to 2.0%, Ni: 2.5% to 6.0%, O: 0.040% or less, N: 0.012% or less, and a balance of Fe and incidental impurities, in which Ceq, which is expressed by the below equation (1), is 0.65 to 1.00, in which α, which is expressed by the below equation (2), is 6.0 or less, in which, when a tensile test is performed on the weld metal, the yield strength (0.2% proof strength) is 630 MPa or higher and the tensile strength is 780 MPa or higher, and in which, when a V-notch Charpy impact test is performed at a testing temperature of 0°C on the weld metal, the absorbed energy vE0 is 47 J or more.

$$Ceq = [C] + 0.17[Mn] + 0.04[Si] + 0.025[Ni] + 0.2[Cr] + 0.25[Mo] \cdots (1)$$

$$\alpha = 30[C] + 0.7[Mn] + [Ni] - ([Si] + 0.5[Cr] + 1.5[Mo]) \cdots (2)$$

Here, in the equation (1) and the equation (2), the expression "[element symbol]" denotes the content (mass%) of the corresponding element in the weld metal described above.

[Submerged arc welding]

A submerged arc welding (also referred to as "SAW") method is a method in which welding is continuously performed by continuously feeding an electrode wire into a powdery and granular flux which has been spread in advance on a base material (for example, a high-strength steel material in the present invention) so that an arc is generated between the front edge of the electrode wire and the base material. This submerged arc welding method has an advantage in that it is possible to increase the deposition rate of the wire by applying a large current, thereby efficiently performing welding.

[Chemical composition of weld metal]

Hereafter, the reasons for the limitations on the chemical composition of the weld metal will be described. Hereinafter, "%" used when describing a chemical composition denotes "mass%".

[C: 0.05% to 0.15%]

C (carbon) is an element which improves the strength of the weld metal, and such an effect is large. In the case where the C content in the weld metal is less than 0.05%, there is insufficient strength. Therefore, the C content is set to be 0.05% or more. It is preferable that the C content be 0.06% or more. On the other hand, in the case where the C content is more than 0.15%, since there is an excessive increase in strength, there is a deterioration in toughness. Therefore, the C content is set to be 0.15% or less. It is preferable that the C content be 0.14% or less. It is more preferable that the C content be 0.12% or less.

[Si: 0.2% to 0.9%]

Si decreases the amount of solid solute O (oxygen) by functioning as a deoxidizing element in the weld metal, thereby contributing to an improvement in the toughness of the weld metal. In addition, Si is also effective for improving strength by decreasing the transformation temperature. Therefore, the Si content is set to be 0.2% or more. It is preferable that the Si content be 0.3% or more. It is more preferable that the Si content be 0.4% or more. On the other hand, in the case where the Si content is more than 0.9%, since there is an excessive increase in hardenability, there is a deterioration in toughness. Therefore, the Si content is set to be 0.9% or less. It is preferable that the Si content be 0.8% or less. It is more preferable that the Si content be 0.7% or less. It is even more preferable that the Si content be 0.6% or less.

[Mn: 0.5% to 1.3%]

Mn is an element which increases hardenability, and it is necessary that the Mn content be 0.5% or more to achieve satisfactory strength. Therefore, the Mn content is set to be 0.5% or more. It is preferable that the Mn content be 0.6% or more. It is more preferable that the Mn content be 0.7% or more. On the other hand, in the case where the content of Mn, which has the tendency of solidification segregation, is more than 1.3%, hot cracking is induced due to solidification segregation. Therefore, the Mn content is set to be 1.3% or less. It is preferable that the Mn content be 1.2% or less. It is more preferable that the Mn content be 1.1% or less. It is even more preferable that the Mn content be 1.0% or less.

[P: 0.015% or less]

Since P is an element which induces hot cracking as a result of being segregated at grain boundaries, it is preferable that the P content be as small as possible in the present invention. However, it is acceptable that the P content be 0.015% or less. Therefore, the P content is set to be 0.015% or less. It is preferable that the P content be 0.012% or less. Here, in the case where an attempt is made to decrease the P content excessively, there is an increase in refining costs. Therefore, it is preferable that the P content be adjusted to be 0.003% or more. It is more preferable that the P content be 0.004% or more.

[S: 0.015% or less]

Since S is an element which induces hot cracking as a result of being segregated at grain boundaries, it is preferable that the S content be as small as possible in the present invention. However, it is acceptable that the S content be 0.015% or less. Therefore, the S content is set to be 0.015% or less. It is preferable that the S content be 0.010% or less. It is more preferable that the S content be 0.008% or less. It is even more preferable that the S content be 0.007% or less. Here, in the case where an attempt is made to decrease the S content excessively, there is an increase in refining costs. Therefore, it is preferable that the S content be adjusted to be 0.002% or more. It is more preferable that the S content be 0.003% or more. It is even more preferable that the S content be 0.004% or more.

[Cr: 0.10% to 0.45%]

Cr is an element which is effective for improving strength, and it is necessary that the Cr content be 0.10% or more. Therefore, the Cr content is set to be 0.10% or more. It is preferable that the Cr content be 0.15% or more. It is more preferable that the Cr content be 0.18% or more. It is even more preferable that the Cr content be 0.22% or more. It is most preferable that the Cr content be 0.30% or more. On the other hand, in the case where the Cr content is more than 0.45%, carbides are precipitated, and such carbides become starting points at which fracturing occurs, which results in a deterioration in the toughness of the weld metal. Therefore, the Cr content is set to be 0.45% or less. It is preferable that the Cr content be 0.40% or less. It is more preferable that the Cr content be 0.38% or less. It is even more preferable that the Cr content be 0.36% or less.

[Mo: 0.5% to 2.0%]

Mo is an element which is effective for improving strength and which promotes the formation of δ ferrite. Therefore, it is necessary that the Mo content be 0.5% or more. Therefore, the Mo content is set to be 0.5% or more. It is preferable that the Mo content be 0.8% or more. It is more preferable that the Mo content be 0.9% or more. It is even more preferable that the Mo content be 1.0% or more. On the other hand, in the case where the Mo content is more than 2.0%, carbides are precipitated, and such carbides become starting points at which fracturing occurs, which results in a deterioration in the toughness of the weld metal. Therefore, the Mo content is set to be 2.0% or less. It is preferable that the Mo content be 1.8% or less. It is more preferable that the Mo content be 1.6% or less. It is even more preferable that the Mo content be 1.4% or less.

[Ni: 2.5% to 6.0%]

Since Ni is an element which is effective for increasing strength without causing a deterioration in toughness, it is necessary that the Ni content be 2.5% or more in the present invention. In the case where the Ni content is less than 2.5%, there is insufficient toughness. Therefore, the Ni content is set to be 2.5% or more. It is preferable that the Ni content be 2.8% or more. It is more preferable that the Ni content be more than 3.0%. It is even more preferable that the Ni content be 3.2% or more. On the other hand, since Ni is an element which has the tendency of solidification segregation, there is an increase in the effect of solidification segregation in the case where the Ni content is more than 6.0%, which results in hot cracking being induced. Therefore, the Ni content is set to be 6.0% or less. It is preferable that the Ni content be 5.8% or less. It is more preferable that the Ni content be 5.5% or less. It is even more preferable that the Ni content be 5.0% or less.

[O: 0.040% or less]

O (oxygen) is an element which is incidentally mixed in the weld metal and which forms oxides in the weld metal. Since such oxides may become starting points at which fracturing occurs, it is desirable that the O content be small. However, it is acceptable that the O content be 0.040% or less. Therefore, the O content is set to be 0.040% or less. It is preferable that the O content be 0.030% or less. It is more preferable that the O content be 0.025% or less. On the other hand, although there is no particular limitation on the lower limit of the O content, it is preferable that the O content be 0.010% or more to prevent a deterioration in toughness due to excessive amounts of deoxidizing elements being added.

[N: 0.012% or less]

N is an element which is incidentally mixed in the weld metal and which causes a deterioration in toughness. Since such an effect becomes marked in the case where the N content is more than 0.012%, the N content is set to be 0.012% or less. It is preferable that the N content be 0.011% or less. It is more preferable that the N content be 0.010% or less. It is even more preferable that the N content be 0.008% or less. On the other hand, N is effective for improving strength through solid solution strengthening. Since such an effect becomes marked in the case where the N content is 0.002% or more, it is preferable that the N content be 0.002% or more. It is more preferable that the N content be 0.003% or more.

[Optional constituents]

The chemical composition described above is the basic chemical composition of the weld metal in the present invention, and, in the present invention, one, two, or all selected from Cu: 0.8% or less, Al: 0.20% or less, and Ti: 0.20% or less may further be added to the basic chemical composition described above as optional constituents as needed. Moreover, one, two, or more selected from Nb: 0.10% or less, V: 0.10% or less, Ca: 0.010% or less, B: 0.010% or less, and REM: 0.020% or less may further be added as optional constituents as needed.

[Cu: 0.8% or less]

Although Cu is an element which improves strength through precipitation strengthening as a result of being finely precipitated in the weld metal, in the case where the Cu content is more than 0.8%, since red shortness occurs in a temperature range around 1100°C, bead surface cracking is induced. Therefore, in the case where Cu is added, the Cu content is set to be 0.8% or less. It is preferable that the Cu content be 0.7% or less. It is more preferable that the Cu content be 0.6% or less. On the other hand, the above-described effect of improving strength through precipitation strengthening becomes marked in the case where the Cu content is 0.1% or more. Therefore, in the case where Cu is added, it is preferable that the Cu content be 0.1% or more. It is more preferable that the Cu content be 0.2% or more.

[Al: 0.20% or less]

Al is an element which functions as a deoxidizing element in the weld metal, thereby contributing to an improvement in the toughness of the weld metal by decreasing the amount of solid solute O. However, in the case where the Al content is more than 0.20%, since there is a coarsening of Al-containing oxides, and since such oxides become starting points at which fracturing occurs, there is a deterioration in toughness. Therefore, in the case where Al is added, the Al content is set to be 0.20% or less. It is preferable that the Al content be 0.18% or less. On the other hand, in the case where Al is added to achieve the above-described effect of contributing to an improvement in the toughness of the weld metal, it is preferable that the Al content be 0.01% or more. It is more preferable that the Al content be 0.02% or more. It is even more preferable that the Al content be 0.03% or more.

[Ti: 0.20% or less]

Ti is an element which functions as a deoxidizing element in the weld metal, thereby contributing to an improvement in the toughness of the weld metal by decreasing the amount of solid solute O, and which decreases the amount of solid solute N by forming TiN. However, in the case where the Ti content is more than 0.20%, since there is a deterioration in ductility due to an increase in the amount of solid solute Ti, there is a deterioration in toughness. Therefore, in the case where Ti is added, the Ti content is set to be 0.20% or less. It is preferable that the Ti content be 0.19% or less. It is more preferable that the Ti content be 0.17% or less. On the other hand, in the case where Ti is added to achieve the above-described effects of contributing to an improvement in the toughness of the weld metal and of decreasing the amount of solid solute N, it is preferable that the Ti content be 0.01% or more. It is more preferable that the Ti content be 0.10% or more.

[Nb: 0.10% or less]

Nb is an element which contributes to an improvement in the strength of the weld metal by increasing hardenability. However, in the case where the Nb content is more than 0.10%, since carbides are formed, and since such carbides become starting points at which fracturing occurs, there is a deterioration in toughness. Therefore, in the case where Nb is added, the Nb content is set to be 0.10% or less. It is preferable that the Nb content be 0.08% or less. It is more preferable that the Nb content be 0.05% or less. On the other hand, in the case where Nb is added to achieve the above-described effect of contributing to an improvement in the strength of the weld metal by increasing hardenability, it is preferable that the Nb content be 0.01% or more. It is more preferable that the Nb content be 0.02% or more.

[V: 0.10% or less]

V is a carbide-forming element which contributes to an improvement in the strength of the weld metal by precipitating fine carbides within grains. However, in the case where the V content is more than 0.10%, since excessive amounts of carbides become starting points at which fracturing occurs, there is a deterioration in toughness. Therefore, in the case where V is added, the V content is set to be 0.10% or less. It is preferable that the V content be 0.08% or less. It is more preferable that the V content be 0.05% or less. On the other hand, in the case where V is added to achieve the above-described effect of contributing to an improvement in the strength of the weld metal, it is preferable that the V content be 0.01% or more. It is more preferable that the V content be 0.02% or more.

[Ca: 0.010% or less]

Ca is an element which inhibits hot cracking by combining with S in the melt metal to form CaS, which is a sulfide having a high melting temperature. However, in the case where the Ca content is more than 0.010%, since Ca is segregated at prior-austenite grain boundaries to cause grain-boundary embrittlement, there is a deterioration in toughness. Therefore, in the case where Ca is added, the Ca content is set to be 0.010% or less. It is preferable that the Ca content be 0.008% or less. On the other hand, the above-described effect of inhibiting hot cracking becomes marked in the case where the Ca content is 0.001% or more. Therefore, in the case where Ca is added, it is preferable that the Ca content be 0.001% or more. It is more preferable that the Ca content be 0.005% or more.

[B: 0.010% or less]

B is an element which contributes to an improvement in the strength of the weld metal by increasing hardenability. However, in the case where the B content is more than 0.010%, since there is an excessive increase in hardenability, a martensite microstructure is formed, which results in a deterioration in toughness. Therefore, in the case where B is added, the B content is set to be 0.010% or less. It is preferable that the B content be 0.008% or less. On the other hand, in the case where B is added to achieve the above-described effect of contributing to an improvement in the strength of the weld metal, it is preferable that the B content be 0.001% or more. Therefore, it is more preferable that the B content be 0.002% or more.

[REM: 0.020% or less]

REM represents rare-earth elements such as Sc, Y, La, Ce, and the like, which inhibit hot cracking by combining with S in the melt metal to form sulfides having a high melting temperature. However, in the case where the REM content is more than 0.020%, since REM is segregated at prior-austenite grain boundaries to cause grain-boundary embrittlement, there is a deterioration in toughness. Therefore, in the case where REM is added, the REM content is set to be 0.020% or less. It is preferable that the REM content be 0.018% or less. On the other hand, the above-described effect of inhibiting hot cracking becomes marked in the case where the REM content is 0.002% or more. Therefore, in the case where REM is added, it is preferable that the REM content be 0.002% or more. It is more preferable that the REM content be 0.003% or more. It is even more preferable that the REM content be 0.005% or more.

[Chemical constituents of the balance]

The balance, which differs from the chemical constituents described above, is Fe and incidental impurities. Here, examples of the incidental impurities include H, Mg, Zn, Re, Co, Sb, and Bi, and it is acceptable that the total of the contents of such elements be 0.0100% or less. In addition, as long as the conditions regarding the basic chemical composition and the optional constituents described above are satisfied, elements other than these elements may be contained, and such kinds of embodiments are within the scope of the present invention.

[Ceq: 0.65 to 1.00]

In the present invention, it is important that Ceq, which is expressed by the below equation (1), be 0.65 to 1.00.

$$Ceq = [C] + 0.17[Mn] + 0.04[Si] + 0.025[Ni] + 0.2[Cr] + 0.25[Mo] \quad \cdots \quad (1)$$

Moreover, in the present invention, it is important that $\alpha$, which is expressed by the below equation (2), be 6.0 or less.

$$\alpha = 30[C] + 0.7[Mn] + [Ni] - ([Si] + 0.5[Cr] + 1.5[Mo]) \quad \cdots \quad (2)$$

Here, the expression "[element symbol]" denotes the content (mass%) of the corresponding element in the weld metal described above.

The present inventors diligently conducted investigations to solve the problems described above and, as a result, found it effective for achieving satisfactory strength and toughness to control Ceq, which is expressed by the above equation (1), to be 0.65 to 1.00 and to adjust $\alpha$, which is expressed by the above equation (2), to be 6.0 or less. Hereafter, this will be described in detail.

Ceq denotes "equivalent carbon content" and represents a value which is obtained by converting the chemical composition of a steel plate into the carbon (C) content. To achieve tensile properties (0.2% proof strength and tensile strength) and toughness appropriate for steel of a 780 MPa class, it is necessary that Ceq be 0.65 to 1.00. In the case where Ceq is less than 0.65, it is not possible to achieve the target tensile properties. Therefore, Ceq is set to be 0.65 or more. It is preferable that Ceq be 0.70 or more. It is more preferable that Ceq be 0.74 or more. On the other hand, in the case where Ceq is more than 1.00, since there is an excessive increase in tensile strength, there is a deterioration in toughness. Therefore, Ceq is set to be 1.00 or less. It is preferable that Ceq be 0.95 or less. It is more preferable that Ceq be 0.90 or less.

[α: 6.0 or less]

From the results of the investigations conducted by the present inventors regarding the causes of hot cracking, it was found that solidification cracking occurs in the case where solidification takes place with an austenite single-phase microstructure being formed. In the case of solidification with an austenite single-phase microstructure, the formation of dendrite is recognized when microstructure observation is performed, and, in particular, there is an increase in the amounts of elements having a small distribution coefficient such as Mn, P, S, and the like, that is, elements which tend to remain in a liquid phase, in which solidification segregation between the dendrite branches occurs. It was found that, in the case where a liquid phase remains until the temperature is excessively lowered due to such solidification segregation, when shrinkage occurs due to the solidification of the weld metal, an open mouth is formed at the position of the liquid phase. Therefore, it was considered to be effective for inhibiting such solidification segregation to limit the amounts of elements having a small distribution coefficient such as Mn, P, S, and the like and to form a δ ferrite phase as a solidified primary crystal. This is because, by forming δ ferrite as a solidified primary crystal, since solid δ ferrite is formed between the dendrite branches of austenite, there is a decrease in the effect of solidification segregation. In addition, it was also found that, by forming δ ferrite, since a complex solidification morphology is formed, there is a decrease in prior austenite grain size. It is presumed that an increase in grain-boundary area due to a decrease in prior austenite grain size also decreases the effect of the solidification segregation of P and S. Therefore, to form δ ferrite as a solidified primary crystal, a balance between austenite-stabilizing elements, that is, C, Mn, and Ni, and ferrite-stabilizing elements, that is, Si, Cr, and Mo, is important. To control the contents of such elements, α, which is expressed by the equation (2), is proposed, and it was found to be sufficient that the value of α be adjusted to be 6.0 or less.

In the case where α is more than 6.0, since hot cracking occurs, it is not possible to obtain a sound joint without welding defects. Therefore, α is set to be 6.0 or less. It is preferable that α be 5.5 or less. On the other hand, in the case where α is 6.0 or less, the less the α, the more likely the δ ferrite to be formed. Therefore, there is no particular limitation on the lower limit of α. However, in EXAMPLES below, it was clarified that hot cracking does not occur in the case where α is 2.0 or more. Therefore, it is preferable that α be 2.0 or more.

[ Grain size (average prior austenite grain size)]

Since P and S, which are contained as incidental impurities, decrease the melting temperature of the weld metal as a result of being segregated at austenite grain boundaries in the solidification process of the weld metal, hot cracking is induced. It is effective for preventing hot cracking by decreasing the amount of P and S segregated to increase the grain-boundary area by decreasing the austenite grain size. As described above, it was found that, in the case where α is 6.0 or less, since a complex solidified shape is formed due to the formation of δ ferrite, the prior austenite grain size is smaller than in the case where solidification takes place with an austenite single-phase microstructure being formed. Therefore, it is presumed that, in the case where α is 6.0 or less, since there is a decrease in the effect of the segregation of P and S, the effect of preventing hot cracking is obtained. In the present invention, although there is no particular limitation on the grain size, it is preferable that the average prior austenite grain size be 2.0 mm or less to achieve the effect described above. It is more preferable that the average prior austenite grain size be 1.5 mm or less. It is even more preferable that the average prior austenite grain size be 1.0 mm or less. Here, the term "average prior austenite grain size" denotes the value of the average prior austenite grain size [G], which is calculated by using the below equation (3), where the central portion of the weld metal having a size of 5 mm × 5 mm is set to be the measuring region, where the number of crystal grains which exist within the measuring region is defined as [nA], and where the number of crystal grains which are cut by the boundary lines of the measuring region is defined as [nB].

$$[G] = \{5 \times 5/([nA] + 0.5[nB])\}1/2 \cdots (3)$$

[Mechanical properties of weld metal]

Incidentally, the preferable mechanical properties of the welded joint according to the present invention will be described.

It is preferable that the weld metal has the chemical composition described above, that, when a tensile test is performed at room temperature on a weld metal which is formed in accordance with the prescription in JIS Z 3111, the yield strength (0.2% proof strength) be 630 MPa or higher and the tensile strength be 780 MPa or higher, and that, when a V-notch Charpy impact test is performed at a testing temperature of 0°C on the weld metal of a welded joint which is formed in accordance with the prescription in JIS Z 3128, the absorbed energy vE0 be 47 J or more.

[Base material]

The base material intended in the present invention is a high-strength steel plate or a steel member of a 780 MPa class which is used for building structures. Hereinafter, description will be made by using a steel plate as an example. Specific examples of the steel plate include a steel plate having a chemical composition containing, by mass%, C: 0.06% to 0.12%, Si: 0.4% or less, Mn: 1.2% to 2.1%, P: 0.010% or less, S: 0.010% or less, Cr: 1.6% or less, Mo: 0.5% or less, Ni: 0.6% to 1.4%, O: 0.005% or less, and N: 0.005% or less, appropriately containing one, two, or more selected from Cu: 0.8% or less, Al: 0.20% or less, Ti: 0.20% or less, Nb: 0.10% or less, V: 0.10% or less, Ca: 0.010% or less, B: 0.010% or less, and REM: 0.020% or less as optional constituents, and containing a balance of Fe and incidental impurities.
In addition, the present invention may be used for steel plates other than those of a 780 MPa class, that is, for example, steel plates of a 590 MPa class, steel plates of a 980 MPa class, or the like.
Incidentally, it is preferable that the thickness of the base material (steel plate) be 30 mm to 100 mm in consideration of a heat input of 300 kJ/cm or more.

[Method for manufacturing welded joint]

Hereafter, a method for manufacturing the welded joint according to the present invention will be described in accordance with examples.
First, as a material to be welded, steel plates of a 780 MPa class having a desired thickness are prepared. Subsequently, edge preparation is performed so that the prepared steel plates form a predetermined groove shape. Examples of a preferable groove shape to be formed include a V-shaped groove and a single-bevel groove which are generally used for the corner welding of a box column.
Subsequently, the steel plates, which have been subjected to edge preparation, are butted and subjected to submerged arc welding, in which a welding wire and a flux are used, with a heat input of 300 kJ/cm or more to form a one-layer weld metal so that the steel plates are joined by welding so as to be made into a submerged arc welded joint.
For the welding conditions, it is preferable that the current of the preceding electrode be 1200 A to 2100 A, the voltage of the preceding electrode be 30 V to 40 V, the current of the succeeding electrode be 1000 A to 1800 A, and the voltage of the succeeding electrode be 36 V to 45 V. In addition, it is preferable that the welding speed be 12 cm/min to 35 cm/min and the heat input be 300 kJ/cm to 600 kJ/cm.
The chemical compositions of the welding wire and the flux to be used are adjusted so that the chemical composition of the weld metal has the chemical composition described above in consideration of the dilution by the base material. Here, there is no particular limitation on the kind of the wire or the welding flux as long as the weld metal has the chemical composition within the range described above. For the welding wire, any one of a solid wire and a metal-cored wire may be used without causing a problem, and, for the flux, any one of a fused flux and a bonded flux may be used without causing a problem. Here, for the wire, in the case where a flux-cored wire, within which flux for the wire is contained, is used, the flux-cored wire is manufactured so that the combination of the chemical compositions of the steel outer skin, the metallic powder, and the flux powder for the wire to be used becomes the target chemical composition of the related welding material.

[Method for manufacturing welding wire]

Methods for manufacturing a solid wire and a metal-cored wire for welding wires will be described.
It is preferable that the solid wire be manufactured by performing a casting process of preparing molten steel having a target chemical composition by using a commonly used melting furnace such as an electric furnace, a vacuum melting furnace, or the like and casting the molten steel into, for example, a mold having a predetermined shape, a heating process of heating the obtained steel ingot to a predetermined temperature, a hot rolling process of performing hot rolling on the heated steel ingot to obtain a steel material (steel bar) having a predetermined shape, and a cold rolling process of performing cold rolling (cold wire drawing) plural times on the obtained steel material (steel bar) with an annealing process being performed as needed under the condition of an annealing temperature of 900°C to 1200°C to obtain a wire having a desired size.
Examples of the chemical composition of the wire include a chemical composition containing, by mass%, C: 0.03% to 0.15%, Si: 0.2% to 1.2%, Mn: 0.5% to 1.4%, P: 0.025% or less, S: 0.010% or less, Cr: 0.10% to 0.55%, Mo: 0.5% to 3.0%, Ni: 2.0% to 9.0%, O: 0.080% or less, and N: 0.020% or less, appropriately containing one, two, or more selected from Cu: 0.8% or less, Al: 0.40% or less, Ti: 0.50% or less, Nb: 0.20% or less, V: 0.20% or less, Ca: 0.030% or less, B: 0.030% or less, and REM: 0.050% or less as optional constituents, and containing a balance of Fe and incidental impurities.

In addition, in the case of the metal-cored wire, for example, a steel sheet having a thickness of 0.5 mm and a chemical composition containing C: 0.01%, Si: 0.01%, Mn: 0.30%, P: 0.010%, S: 0.010%, and a balance of Fe, which is used as a steel outer skin, is subjected to cold bending work in the width direction so as to take a U-like shape. Subsequently, the obtained steel outer skin is filled with alloy powder having an adjusted chemical composition so that the wire has a target chemical composition and subjected to cold wire drawing to obtain a wire having a diameter of 3.2 mm$\phi$.

The chemical composition of the alloy powder described above is adjusted so that the combination with the chemical composition of the steel outer skin becomes the chemical composition which the welding wire is required to have.

[Welding flux]

There is no particular limitation on the kind of welding flux, and any one of a fused flux and a bonded flux, which are ordinary known fluxes, may be used. Examples of the chemical composition of a bonded flux which may be used include a powdery material containing $SiO_2$: 15%, CaO: 15%, MgO: 30%, $Al_2O_3$: 25%, $CaF_2$: 10%, $CaCO_3$: 5%, and the like. However, in the present invention, the welding flux is not limited to this example.

EXAMPLES

Hereafter, effects of the present invention will be described specifically with reference to examples and comparative examples of the present invention. Here, the present invention is not limited to the contents described in EXAMPLES.

Steel plates of a 780 MPa class having the chemical compositions given in Table 1 and a thickness of 50 mm were used. The groove had a V-like shape having a groove angle of 35°, a root face of 1 mm, and a root gap of 0 mm.

[Table 1]

| Kind of Steel Plate | Chemical Composition of Steel Plate (mass%) | | | | | | | | | | |
|---|---|---|---|---|---|---|---|---|---|---|---|
| | C | Si | Mn | P | S | Cr | Mo | Ni | O | N | Cu, Nb, V |
| a | 0.08 | 0.2 | 1.4 | 0.005 | 0.003 | 0.50 | 0.5 | 1.4 | 0.003 | 0.003 | - |
| b | 0.06 | 0.2 | 1.8 | 0.004 | 0.002 | 0.30 | 0.3 | 1.0 | 0.002 | 0.003 | Cu: 0.4 |
| c | 0.10 | 0.1 | 1.4 | 0.003 | 0.002 | 0.40 | 0.3 | 1.0 | 0.002 | 0.003 | Nb: 0.03, V: 0.05 |

In the present examples, metal-cored wires were manufactured. A steel sheet used for the steel outer skins had a chemical composition containing C: 0.01%, Si: 0.01%, Mn: 0.30%, P: 0.010%, S: 0.010%, and a balance of Fe, and such steel outer skins were filled with metallic powder to manufacture metal-cored wires having a diameter of 3.2 mm$\varphi$ and the chemical compositions given in Table 2 as welding wires.

[Table 2]

| Kind of Wire | Chemical Composition of Welding Wire (mass%) | | | | | | | | | | | |
|---|---|---|---|---|---|---|---|---|---|---|---|---|
| | C | Si | Mn | P | S | Cr | Mo | Ni | O | N | Cu, Al, Ti | Nb, V, Ca, B, REM |
| a | 0.08 | 0.4 | 1.2 | 0.010 | 0.010 | 0.30 | 1.2 | 3.5 | 0.040 | 0.008 | - | - |
| b | 0.08 | 0.8 | 0.6 | 0.010 | 0.008 | 0.40 | 1.8 | 4.0 | 0.051 | 0.010 | Cu: 0.8 | - |
| c | 0.12 | 0.3 | 0.8 | 0.014 | 0.010 | 0.10 | 1.8 | 4.5 | 0.040 | 0.012 | Al: 0.35 | - |
| d | 0.10 | 0.8 | 1.0 | 0.012 | 0.006 | 0.30 | 1.2 | 3.0 | 0.060 | 0.008 | Cu: 0.4, Ti: 0.42 | - |
| e | 0.08 | 0.4 | 1.2 | 0.010 | 0.008 | 0.30 | 1.2 | 5.8 | 0.060 | 0.010 | - | Nb: 0.14 |
| f | 0.08 | 0.4 | 1.2 | 0.010 | 0.010 | 0.30 | 1.2 | 4.0 | 0.051 | 0.008 | - | V: 0.12 |
| g | 0.08 | 0.4 | 1.0 | 0.012 | 0.006 | 0.30 | 1.2 | 4.0 | 0.053 | 0.012 | - | Nb: 0.10, V: 0.06 |

(continued)

| Kind of Wire | Chemical Composition of Welding Wire (mass%) | | | | | | | | | | | |
|---|---|---|---|---|---|---|---|---|---|---|---|---|
| | C | Si | Mn | P | S | Cr | Mo | Ni | O | N | Cu, Al, Ti | Nb, V, Ca, B, REM |
| h | 0.11 | 0.4 | 1.1 | 0.008 | 0.008 | 0.20 | 1.2 | 3.5 | 0.058 | 0.014 | - | Ca: 0.025 |
| i | 0.08 | 0.4 | 1.2 | 0.008 | 0.010 | 0.20 | 1.2 | 3.5 | 0.052 | 0.012 | - | B: 0.024 |
| j | 0.06 | 1.0 | 1.0 | 0.010 | 0.010 | 0.30 | 2.5 | 7.8 | 0.061 | 0.011 | - | REM: 0.050 |
| k | 0.14 | 1.1 | 0.5 | 0.009 | 0.006 | 0.30 | 2.4 | 5.8 | 0.068 | 0.009 | - | - |
| l | 0.08 | 0.4 | 1.2 | 0.008 | 0.008 | 0.30 | 1.4 | 3.0 | 0.042 | 0.007 | Al: 0.10 | V: 0.14 |
| m | 0.10 | 0.8 | 1.4 | 0.010 | 0.010 | 0.40 | 1.0 | 3.0 | 0.053 | 0.006 | Ti: 0.20 | B: 0.020 |
| n | 0.08 | 1.0 | 0.5 | 0.008 | 0.008 | 0.30 | 1.4 | 4.8 | 0.058 | 0.004 | - | - |
| o | 0.06 | 1.0 | 1.2 | 0.010 | 0.006 | 0.10 | 1.2 | 4.4 | 0.040 | 0.005 | Cu: 0.4 | V: 0.12, REM: 0.040 |
| P | 0.12 | 0.3 | 1.4 | 0.010 | 0.010 | 0.40 | 0.9 | 7.0 | 0.060 | 0.014 | - | - |
| q | 0.14 | 1.2 | 1.4 | 0.008 | 0.008 | 0.40 | 2.4 | 7.5 | 0.051 | 0.008 | - | - |
| r | 0.08 | 0.5 | 0.6 | 0.008 | 0.006 | 0.30 | 1.0 | 3.0 | 0.053 | 0.012 | - | - |
| s | 0.08 | 0.4 | 1.8 | 0.009 | 0.010 | 0.30 | 1.2 | 4.4 | 0.058 | 0.014 | - | - |
| t | 0.08 | 0.4 | 1.2 | 0.010 | 0.008 | 0.30 | 2.9 | 3.5 | 0.052 | 0.012 | - | - |
| u | 0.10 | 0.4 | 1.2 | 0.010 | 0.010 | 0.30 | 1.2 | 2.0 | 0.061 | 0.011 | - | - |
| v | 0.05 | 1.2 | 1.0 | 0.010 | 0.006 | 0.42 | 1.2 | 8.8 | 0.068 | 0.009 | - | - |
| w | 0.08 | 0.4 | 1.2 | 0.025 | 0.010 | 0.30 | 1.2 | 3.5 | 0.040 | 0.007 | - | - |
| x | 0.08 | 0.4 | 1.2 | 0.010 | 0.010 | 0.51 | 1.2 | 3.5 | 0.052 | 0.006 | - | - |

For fluxes, bonded fluxes having the chemical compositions given in Table 3 were used.

[Table 3]

| Flux No. | Chemical Composition of Flux (mass%) | | | | | |
|---|---|---|---|---|---|---|
| | $SiO_2$ | CaO | MgO | $Al_2O_3$ | $CaF_2$ | $CaCO_3$ |
| 1 | 15 | 15 | 30 | 25 | 10 | 5 |

Submerged arc welding was performed under the welding conditions given in Table 4 to obtain submerged arc welded joints.

[Table 4]

| Welding Condition No. | Preceding Electrode | | Succeeding Electrode | | Welding Speed (cm/min) | Welding Heat Input (kJ/cm) |
|---|---|---|---|---|---|---|
| | Current (A) | Voltage (V) | Current (A) | Voltage (V) | | |
| 1 | 1400 | 38 | 1200 | 45 | 15 | 429 |
| 2 | 1300 | 35 | 1100 | 42 | 16 | 344 |
| 3 | 1300 | 35 | 1200 | 45 | 15 | 398 |
| 4 | 1200 | 35 | 1000 | 42 | 14 | 360 |
| 5 | 1300 | 35 | 1200 | 45 | 12 | 498 |
| 6 | 1400 | 38 | 1200 | 45 | 14 | 459 |

(continued)

| Welding Condition No. | Preceding Electrode | | Succeeding Electrode | | Welding Speed (cm/min) | Welding Heat Input (kJ/cm) |
|---|---|---|---|---|---|---|
| | Current (A) | Voltage (V) | Current (A) | Voltage (V) | | |
| 7 | 1400 | 38 | 1200 | 45 | 14 | 459 |
| 8 | 1300 | 35 | 1100 | 42 | 12 | 459 |
| 9 | 1200 | 35 | 1000 | 45 | 12 | 435 |
| 10 | 1400 | 40 | 1200 | 45 | 16 | 413 |
| 11 | 1200 | 35 | 1100 | 45 | 14 | 392 |
| 12 | 1300 | 37 | 1200 | 45 | 14 | 438 |
| 13 | 1200 | 35 | 1000 | 45 | 14 | 373 |
| 14 | 1200 | 35 | 1000 | 45 | 13 | 402 |
| 15 | 1200 | 35 | 1000 | 42 | 13 | 388 |
| 16 | 1200 | 35 | 1100 | 45 | 15 | 366 |
| 17 | 1200 | 35 | 1100 | 45 | 14 | 392 |
| 18 | 1200 | 35 | 1100 | 45 | 14 | 392 |
| 19 | 1200 | 35 | 1100 | 45 | 14 | 392 |
| 20 | 1200 | 35 | 1100 | 45 | 14 | 392 |
| 21 | 1300 | 35 | 1200 | 45 | 15 | 398 |
| 22 | 1300 | 37 | 1200 | 45 | 14 | 438 |
| 23 | 1200 | 35 | 1000 | 45 | 14 | 373 |
| 24 | 1200 | 35 | 1000 | 45 | 14 | 373 |
| 25 | 1400 | 38 | 1200 | 45 | 15 | 429 |
| 26 | 1300 | 35 | 1100 | 42 | 16 | 344 |
| 27 | 1300 | 35 | 1200 | 45 | 15 | 398 |
| 28 | 1200 | 35 | 1000 | 42 | 14 | 360 |
| 29 | 1300 | 35 | 1200 | 45 | 12 | 498 |
| 30 | 1400 | 38 | 1200 | 45 | 15 | 429 |
| 31 | 1300 | 35 | 1100 | 42 | 16 | 344 |
| 32 | 1300 | 35 | 1200 | 45 | 15 | 398 |
| 33 | 1200 | 35 | 1000 | 42 | 14 | 360 |
| 34 | 1300 | 35 | 1200 | 45 | 12 | 498 |

After welding had been performed, a test specimen for analysis was taken from the central portion of the weld metal and subjected to elemental analysis by using a wet analysis method.

In addition, a sample for cross-sectional macrostructure observation was taken from the weld metal, subjected to mirror polishing, and subjected to observation with an optical microscope to judge whether or not welding cracking occurred. A case where the occurrence of cracking was recognized in the weld metal was judge as a case "with" welding cracking. A case where the occurrence of cracking was not recognized was judged as "without" welding cracking.

In addition, the sample for cross-sectional macrostructure observation which had been subjected to mirror polishing was subjected to etching in the saturated aqueous solution of picric acid to expose prior austenite crystal grain boundaries and subjected to observation with an optical microscope to evaluate the austenite grain size. For the austenite grain size, the average prior austenite grain size [G] was calculated by using the below equation (3), where the central portion of the weld metal having a size of 5 mm × 5 mm was set to be the measuring region, where the counted number of crystal grains which existed within the measuring region was defined as [nA], and where the counted number of crystal grains which were cut by the boundary lines of the measuring region was defined as [nB].

$$[G] = \{5 \times 5/([nA] + 0.5[nB])\}1/2 \cdots (3)$$

In addition, a JIS NO. Al test piece for tensile test (having a diameter of a parallel part of 12.5 mm$\varphi$) was taken in accordance with the prescription in JIS Z 3111 from the central portion of the weld metal located 20 mm from the back surface of the steel plate of the obtained joint to perform a tensile test.

In addition, a Charpy impact test specimen (with a V-notch) was taken in accordance with the prescription in JIS Z 3128 from the central portion of the weld metal located 10 mm from the back surface of the steel plate of the joint to perform an impact test. The testing temperature was 0°C.

The tensile test was performed at room temperature three times for each set of the conditions, and the tensile properties of the relevant weld metal were represented by the average values of the obtained values (0.2% proof strength and tensile strength). The Charpy impact test was also performed three times for each set of the conditions to obtain the absorbed energy at a testing temperature of 0°C vE0, and the cryogenic impact toughness of the weld metal of the relevant welded joint was represented by the average value of the obtained values.

The target values in the present invention are set as follows in the same manner as described above. When a tensile test is performed at room temperature on the weld metal, the yield strength (0.2% proof strength) is 630 MPa or higher and the tensile strength is 780 MPa or higher. In addition, when a V-notch Charpy impact test is performed at a testing temperature of 0°C on the weld metal, the absorbed energy vE0 is 47 J or more. The obtained results are given in Table 5.

[Table 5]

| Kind of Welded Joint | Kind of Steel plate | Kind of Welding Wire | Flux No. | Welding Condition No. | Chemical Composition of Weld Metal (mass%) | | | | | | | | | | | | | | Cracking | Grain Size [G] (mm) | Tensile Property (MPa) | | Impact Toughness vE0 (J) | Note |
|---|---|---|---|---|---|---|---|---|---|---|---|---|---|---|---|---|---|---|---|---|---|---|---|---|---|
| | | | | | C | Si | Mn | P | S | Cr | Mo | Ni | O | N | Cu, Al, Ti | Nb, V, Ca, B, REM | Ceq | α | | | | 0.2% Proof Strength | Tensile Strength | | |
| A | a | a | 1 | 1 | 0.08 | 0.3 | 1.2 | 0.007 | 0.006 | 0.37 | 1.0 | 2.8 | 0.018 | 0.006 | - | - | 0.67 | 3.9 | without | 0.7 | 642 | 804 | 76 | Example |
| B | a | b | 1 | 2 | 0.08 | 0.6 | 0.7 | 0.008 | 0.005 | 0.42 | 1.5 | 3.4 | 0.029 | 0.008 | Cu: 0.6 | - | 0.76 | 3.0 | without | 0.6 | 729 | 906 | 85 | Example |
| C | a | c | 1 | 3 | 0.10 | 0.3 | 0.9 | 0.010 | 0.006 | 0.22 | 1.4 | 3.6 | 0.019 | 0.009 | Al: 0.16 | - | 0.75 | 4.8 | without | 0.8 | 682 | 857 | 74 | Example |
| D | a | d | 1 | 4 | 0.09 | 0.6 | 1.0 | 0.009 | 0.003 | 0.35 | 1.0 | 2.6 | 0.035 | 0.007 | Cu: 0.3, Ti: 0.19 | - | 0.68 | 3.7 | without | 0.8 | 693 | 855 | 82 | Example |
| E | a | e | 1 | 5 | 0.08 | 0.3 | 1.2 | 0.007 | 0.004 | 0.38 | 0.9 | 4.1 | 0.027 | 0.007 | - | Nb: 0.08 | 0.70 | 5.3 | without | 0.9 | 666 | 832 | 58 | Example |
| F | a | f | 1 | 6 | 0.08 | 0.3 | 1.2 | 0.007 | 0.005 | 0.37 | 0.9 | 3.1 | 0.024 | 0.006 | - | V: 0.08 | 0.68 | 4.2 | without | 0.9 | 659 | 821 | 82 | Example |
| G | a | g | 1 | 7 | 0.08 | 0.3 | 1.1 | 0.008 | 0.003 | 0.37 | 0.9 | 3.1 | 0.025 | 0.009 | - | Nb: 0.06, V: 0.04 | 0.66 | 4.1 | without | 0.8 | 657 | 816 | 56 | Example |
| H | a | h | 1 | 8 | 0.09 | 0.3 | 1.1 | 0.006 | 0.004 | 0.31 | 0.9 | 2.7 | 0.028 | 0.010 | - | Ca: 0.008 | 0.67 | 4.5 | without | 0.8 | 640 | 800 | 58 | Example |
| I | a | i | 1 | 9 | 0.08 | 0.3 | 1.2 | 0.006 | 0.006 | 0.30 | 1.0 | 2.8 | 0.026 | 0.009 | - | B: 0.008 | 0.66 | 4.0 | without | 0.9 | 641 | 800 | 73 | Example |
| J | a | j | 1 | 10 | 0.06 | 0.7 | 1.0 | 0.007 | 0.006 | 0.36 | 1.9 | 5.8 | 0.033 | 0.009 | - | REM: 0.017 | 0.95 | 4.6 | without | 0.8 | 726 | 938 | 104 | Example |
| K | a | k | 1 | 11 | 0.12 | 0.8 | 0.7 | 0.007 | 0.003 | 0.36 | 1.8 | 4.5 | 0.039 | 0.007 | - | - | 0.91 | 4.8 | without | 0.9 | 714 | 918 | 82 | Example |
| L | a | l | 1 | 12 | 0.08 | 0.3 | 1.2 | 0.006 | 0.004 | 0.37 | 1.1 | 2.5 | 0.019 | 0.006 | Al: 0.04 | V: 0.09 | 0.70 | 3.4 | without | 0.8 | 672 | 838 | 57 | Example |
| M | a | m | 1 | 13 | 0.09 | 0.6 | 1.3 | 0.008 | 0.006 | 0.43 | 0.9 | 2.6 | 0.029 | 0.005 | Ti: 0.09 | B: 0.007 | 0.70 | 4.0 | without | 0.7 | 662 | 829 | 52 | Example |
| N | a | n | 1 | 14 | 0.08 | 0.7 | 0.7 | 0.006 | 0.004 | 0.36 | 1.1 | 3.8 | 0.031 | 0.004 | - | - | 0.67 | 3.9 | without | 0.8 | 641 | 802 | 72 | Example |
| O | a | o | 1 | 15 | 0.06 | 0.7 | 1.2 | 0.008 | 0.003 | 0.22 | 1.0 | 3.5 | 0.019 | 0.004 | Cu: 0.3 | V: 0.09, REM: 0.014 | 0.67 | 3.8 | without | 0.8 | 687 | 848 | 85 | Example |
| P | a | p | 1 | 16 | 0.10 | 0.3 | 1.3 | 0.008 | 0.006 | 0.43 | 0.8 | 5.5 | 0.035 | 0.011 | - | - | 0.76 | _7.9_ | with | 2.9 | Undetectable | Undetectable | Undetectable | Comparative Example |
| Q | a | q | 1 | 17 | 0.12 | 0.9 | 1.3 | 0.006 | 0.005 | 0.43 | 1.8 | 5.7 | 0.027 | 0.007 | - | - | _1.07_ | _6.3_ | with | 2.7 | Undetectable | Undetectable | Undetectable | Comparative Example |
| R | a | r | 1 | 18 | 0.08 | 0.4 | 0.8 | 0.006 | 0.003 | 0.36 | 0.9 | 2.5 | 0.028 | 0.009 | - | - | _0.57_ | 3.5 | without | 0.8 | _610_ | _752_ | 58 | Comparative Example |
| S | a | s | 1 | 19 | 0.08 | 0.3 | _1.6_ | 0.007 | 0.006 | 0.36 | 1.0 | 3.5 | 0.032 | 0.011 | - | - | 0.77 | 4.9 | with | 0.9 | Undetectable | Undetectable | Undetectable | Comparative Example |
| T | a | t | 1 | 20 | 0.08 | 0.3 | 1.2 | 0.008 | 0.005 | 0.36 | _2.2_ | 2.9 | 0.028 | 0.009 | - | - | 0.98 | 2.2 | without | 0.7 | 735 | 951 | _36_ | Comparative Example |
| U | a | u | 1 | 21 | 0.09 | 0.3 | 1.2 | 0.008 | 0.006 | 0.36 | 1.0 | _1.8_ | 0.034 | 0.009 | - | - | 0.67 | 3.3 | without | 0.8 | 640 | 800 | _32_ | Comparative Example |
| V | a | v | 1 | 22 | 0.06 | 0.8 | 1.1 | 0.007 | 0.003 | 0.45 | 1.0 | _6.3_ | 0.036 | 0.007 | - | - | 0.76 | 6.2 | with | 2.9 | Undetectable | Undetectable | Undetectable | Comparative Example |
| W | a | w | 1 | 23 | 0.08 | 0.3 | 1.2 | _0.019_ | 0.006 | 0.35 | 1.0 | 2.9 | 0.020 | 0.006 | - | - | 0.68 | 4.0 | with | 0.9 | Undetectable | Undetectable | Undetectable | Comparative Example |
| X | a | x | 1 | 24 | 0.08 | 0.3 | 1.2 | 0.008 | 0.006 | _0.51_ | 1.0 | 2.9 | 0.029 | 0.005 | - | - | 0.71 | 3.9 | without | 0.7 | 654 | 823 | _42_ | Comparative Example |
| Y | b | a | 1 | 25 | 0.07 | 0.3 | 1.3 | 0.007 | 0.006 | 0.30 | 0.9 | 2.8 | 0.019 | 0.007 | Cu: 0.1 | - | 0.66 | 3.9 | without | 0.8 | 651 | 811 | 80 | Example |
| Z | b | b | 1 | 26 | 0.07 | 0.6 | 0.8 | 0.007 | 0.004 | 0.37 | 1.4 | 3.2 | 0.028 | 0.008 | Cu: 0.7 | - | 0.74 | 3.0 | without | 0.7 | 731 | 905 | 78 | Example |
| AA | b | c | 1 | 27 | 0.10 | 0.3 | 1.0 | 0.010 | 0.006 | 0.16 | 1.4 | 3.5 | 0.019 | 0.009 | Cu: 0.1, Al: 0.17 | - | 0.74 | 4.8 | without | 0.9 | 691 | 864 | 70 | Example |
| AB | b | d | 1 | 28 | 0.09 | 0.6 | 1.1 | 0.009 | 0.003 | 0.30 | 1.0 | 2.5 | 0.036 | 0.007 | Cu: 0.4, Ti: 0.20 | - | 0.67 | 3.6 | without | 0.8 | 701 | 861 | 88 | Example |
| AC | b | e | 1 | 29 | 0.07 | 0.3 | 1.3 | 0.007 | 0.004 | 0.30 | 0.9 | 4.2 | 0.030 | 0.008 | Cu: 0.1 | Nb: 0.09 | 0.69 | 5.3 | without | 1.0 | 680 | 845 | 65 | Example |
| AD | c | a | 1 | 30 | 0.08 | 0.3 | 1.2 | 0.007 | 0.006 | 0.33 | 0.9 | 2.7 | 0.018 | 0.006 | - | Nb: 0.01, V: 0.02 | 0.66 | 4.2 | without | 0.9 | 642 | 801 | 75 | Example |
| AE | c | b | 1 | 31 | 0.08 | 0.6 | 0.7 | 0.007 | 0.005 | 0.40 | 1.4 | 3.3 | 0.029 | 0.008 | Cu: 0.6 | Nb: 0.01, V: 0.01 | 0.75 | 3.2 | without | 0.8 | 728 | 903 | 70 | Example |
| AF | c | c | 1 | 32 | 0.11 | 0.2 | 0.9 | 0.010 | 0.006 | 0.18 | 1.4 | 3.6 | 0.020 | 0.010 | Al: 0.17 | Nb: 0.01, V: 0.01 | 0.74 | 5.1 | without | 1.0 | 684 | 858 | 64 | Example |
| AG | c | d | 1 | 33 | 0.10 | 0.6 | 1.0 | 0.009 | 0.003 | 0.33 | 1.0 | 2.5 | 0.035 | 0.007 | Cu: 0.3, Ti: 0.19 | Nb: 0.01, V: 0.01 | 0.66 | 3.8 | without | 0.9 | 692 | 851 | 82 | Example |
| AH | c | e | 1 | 34 | 0.08 | 0.3 | 1.2 | 0.007 | 0.004 | 0.33 | 0.9 | 4.3 | 0.032 | 0.008 | - | Nb: 0.10, V: 0.02 | 0.70 | 5.7 | without | 1.0 | 674 | 839 | 71 | Example |

Underlined portions indicate items out of the range of the present invention.

In the case of any of the examples of the present invention, the occurrence of cracking was not recognized. Moreover, the yield strength (0.2% proof strength) at room temperature was 630 MPa or higher, and the tensile strength at room temperature was 780 MPa or higher, and the absorbed energy vE0 in the Charpy impact test at a testing temperature of 0°C was 47 J or more. That is, welded joints having high strength and excellent toughness were obtained.

On the other hand, in the case of any of the comparative examples, which were out of the range of the present invention, the target welded joint was not obtained. That is, cracking occurred, or the strength or impact toughness of the weld metal was not sufficient.

## Claims

1. A submerged arc welded joint, the joint comprising a weld metal which is formed by using a welding wire and a flux in combination and by performing submerged arc welding with a welding heat input of 300 kJ/cm or more, wherein the weld metal has a chemical composition containing, by mass%,

   C: 0.05% to 0.15%,
   Si: 0.2% to 0.9%,
   Mn: 0.5% to 1.3%,
   P: 0.015% or less,
   S: 0.015% or less,
   Cr: 0.10% to 0.45%,
   Mo: 0.5% to 2.0%,
   Ni: 2.5% to 6.0%,
   O: 0.040% or less,
   N: 0.012% or less, and a balance of Fe and incidental impurities, wherein Ceq, which is expressed by a below equation (1), is 0.65 to 1.00, wherein $\alpha$, which is expressed by a below equation (2), is 6.0 or less, wherein, when a tensile test is performed on the weld metal, yield strength is 630 MPa or higher and tensile strength is 780 MPa or higher, and wherein, when a V-notch Charpy impact test is performed at a testing temperature of 0°C on the weld metal, absorbed energy vE0 is 47 J or more:

   $$Ceq = [C] + 0.17[Mn] + 0.04[Si] + 0.025[Ni] + 0.2[Cr] + 0.25[Mo] \cdots (1),$$

   $$\alpha = 30[C] + 0.7[Mn] + [Ni] - ([Si] + 0.5[Cr] + 1.5[Mo]) \cdots (2),$$

   where, in the equation (1) and the equation (2), the expression "[element symbol]" denotes a content (mass%) of the corresponding element in the weld metal described above.

2. The submerged arc welded joint according to Claim 1,

   wherein the weld metal has the chemical composition further containing, by mass%, one, two, or all selected from
   Cu: 0.8% or less,
   Al: 0.20% or less, and
   Ti: 0.20% or less.

3. The submerged arc welded joint according to Claim 1 or 2, wherein the weld metal has the chemical composition further containing, by mass%, one, two, or more selected from

   Nb: 0.10% or less,
   V: 0.10% or less,
   Ca: 0.010% or less,
   B: 0.010% or less, and
   REM: 0.020% or less.

## INTERNATIONAL SEARCH REPORT

| International application No. |
|---|
| **PCT/JP2022/016785** |

**A.    CLASSIFICATION OF SUBJECT MATTER**

*C22C 38/00*(2006.01)i; *C22C 38/58*(2006.01)i; *B23K 35/30*(2006.01)i; *B23K 35/362*(2006.01)i; *B23K 9/18*(2006.01)i; *B23K 9/23*(2006.01)i
FI:    B23K9/18 Z; B23K9/23 A; B23K35/362 310C; C22C38/00 301A; C22C38/58; B23K35/30 320A; B23K35/362 310A; B23K35/362 310B; B23K35/30 A

According to International Patent Classification (IPC) or to both national classification and IPC

**B.    FIELDS SEARCHED**

Minimum documentation searched (classification system followed by classification symbols)

B23K9/18; B23K9/23; B23K35/30; B23K35/362; C22C38/00; C22C38/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2018/185851 A1 (NIPPON STEEL & SUMITOMO METAL CORP) 11 October 2018 (2018-10-11)<br>    entire text, all drawings | 1-3 |
| A | JP 2010-94686 A (NIPPON STEEL CORP) 30 April 2010 (2010-04-30)<br>    entire text, all drawings | 1-3 |
| A | JP 10-324950 A (SUMITOMO METAL IND LTD) 08 December 1998 (1998-12-08)<br>    entire text, all drawings | 1-3 |
| A | JP 2013-142160 A (JFE STEEL CORP) 22 July 2013 (2013-07-22)<br>    entire text, all drawings | 1-3 |

☐ Further documents are listed in the continuation of Box C.     ☑ See patent family annex.

| | |
|---|---|
| \*    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/016785**

| Patent document cited in search report | | | Publication date (day/month/year) | Patent family member(s) | | | Publication date (day/month/year) |
|---|---|---|---|---|---|---|---|
| WO | 2018/185851 | A1 | 11 October 2018 | US | 2020/0032931 | A1 | |
| | | | | entire text, all drawings | | | |
| | | | | EP | 3608433 | A1 | |
| | | | | CN | 110475887 | A | |
| | | | | KR | 10-2019-0124253 | A | |
| JP | 2010-94686 | A | 30 April 2010 | (Family: none) | | | |
| JP | 10-324950 | A | 08 December 1998 | US | 6188037 | B1 | |
| | | | | entire text, all drawings | | | |
| | | | | EP | 867520 | A2 | |
| JP | 2013-142160 | A | 22 July 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015110241 A
- JP 2015120175 A
- JP 2004337863 A
- JP 2008240096 A